# EUROPÄISCHE PATENTSCHRIFT

(11) **EP 1 311 363 B1**
(45) Veröffentlichungstag und Bekanntmachung des Hinweises auf die Patenterteilung: **31.12.2008**
(21) Anmeldenummer: 01951667.3
(22) Anmeldetag: 11.07.2001
(51) Int. Cl.: B23B 27/16

(54) **SCHNEIDPLATTE FÜR DREHENDE WERKZEUGE**
CUTTING PLATE FOR ROTATING TOOLS
PLAQUE DE COUPE POUR OUTILS ROTATIFS

(30) Priorität: 16.08.2000 DE 10040612
(43) Veröffentlichungstag der Anmeldung: 21.05.2003
(73) Patentinhaber: KOMET GROUP Holding GmbH, 74354 Besigheim (DE)
(72) Erfinder: LEUZE, Peter, 74399 Walheim (DE); RÖSER, Frank, 74376 Gemmrigheim (DE)
(74) Vertreter: Wolf, Eckhard
(86) Internationale Anmeldenummer: PCT/EP2001/008001
(87) Internationale Veröffentlichungsnummer: WO 2002/014003

(56) Entgegenhaltungen:
- EP-A- 0 577 011
- US-A- 5 755 536

## Beschreibung

Die Erfindung betrifft eine Schneidplatte für um eine Werkzeugachse drehende Werkzeuge, insbesondere für mehrschneidige Bohrwerkzeuge, mit einer Hauptschneide und einer in deren Verlängerung radial nach außen hin über eine Plattenecke unter einem Winkel an diese anschließende Nebenschneide, mit einer auf einer Längsseite an die Hauptschneide und die Nebenschneide anschließenden gemeinsamen Spanfläche und mit je einer auf der anderen Längsseite an die Hauptschneide bzw. die Nebenschneide anschließenden, mit der gemeinsamen Spanfläche je einen Keilwinkel einschließenden Hauptfreifläche bzw. Nebenfreifläche (siehe z.B. US-A-5 755 536).

Um bei lang auskragenden und mehrschneidigen Werkzeugen mit Schneidplatten der vorgenannten Art Vibrationen beim Arbeitsvorgang zu vermeiden, ist dort eine als Führungskante ausgebildete Nebenschneide vorgesehen, die an der gebohrten Wand entlanggeführt wird. Zur Erzielung der Führungswirkung wird die Führungskante üblicherweise mit einem Rundschliff versehen, dessen Krümmungsradius kleiner als der Bohrungsradius ist. Dies bedeutet, daß die Führungskante entlang einer Linie an der Bohrungswand geführt ist. Wenn der Rundschliff einen zu kleinen Radius aufweist, wird die Führung relativ schlecht. Das Werkzeug rattert, weil es mit der Führungskante an der Bohrungswand hängen bleibt oder einschneidet. Bei einer Annäherung an den Bohrungsradius kommt es zu einer Flächenberührung, die den Reibanteil des Werkzeugs in der Bohrung erhöht und zu Überlastungen der Maschine und/oder der Werkzeuge führen kann. Dieser Effekt wird um so schwerwiegender, je mehr Schneiden über den Umfang des Werkzeugs angeordnet sind.

Ausgehend hiervon liegt der Erfindung die Aufgabe zugrunde, die Schneidplatte der eingangs angegeben Art dahingehend zu verbessern, daß sich im Bereich der Nebenschneide eine optimale Stützwirkung bei minimaler Reibung ergibt.

Zur Lösung dieser Aufgabe werden die im Anspruch 1 angegebenen Merkmale vorgeschlagen. Vorteilhafte Ausgestaltungen und Weiterbildungen ergeben sich aus den abhängigen Ansprüchen.

Die erfindungsgemäße Lösung geht von dem Gedanken aus, daß im Bereich der Nebenschneide eine Stützfase angeordnet ist, die durch zwei in Drehrichtung des Werkzeugs im Abstand voneinander angeordnete Stützkanten begrenzt ist, die über ihre gesamte Länge den gleichen, zugleich den Flugkreisradius des Werkzeugs bildenden Radiusabstand von der Werkzeugachse aufweisen. Die Stützkanten verlaufen dabei in ihrer Längserstreckung zweckmäßig parallel zur Werkzeugachse, während die zwischen den Stützkanten befindliche Stützfase vorzugsweise als ebene Fläche ausgebildet ist. Die Stützfase weist in ihrer parallel zur Werkzeugachse ausgerichteten Längserstreckung vorteilhafterweise eine Länge auf, die mindestens dem doppelten Abstand zwischen den Stützkanten entspricht. Um eine reibungsarme Abstützung zu erhalten, sollten die Stützkanten je nach Bohrungsdurchmesser einen Abstand von 0,1 bis 1,5 mm voneinander aufweisen. Die Stützfase zwischen den Stützkanten erstreckt sich dabei vorteilhafterweise über einen Bruchteil der Schneidplattendicke. In ihrer Längserstreckung reicht die Stützfase bis zu der ggf. gerundeten oder facettierten Schneidenecke. Die Stützkanten können gerundet oder vorzugsweise tangential zum Werkzeugflugkreis facettiert sein. Eine bevorzugte Ausgestaltung der Erfindung sieht vor, daß die Hauptschneide und die als Stützfase ausgebildete Nebenschneide in ihrer Längserstreckung einen rechten Winkel miteinander einschließen.

Die erfindungsgemäße Schneidplatte kann sowohl als Wechselschneidplatte mit nur einer Schneidenecke als auch als Umsetzschneidplatte mit mehreren Schneidecken ausgebildet sein. Im letzteren Falle sind mindestens zwei in gleichen Winkelabständen voneinander angeordnete Hauptschneiden und Nebenschneiden vorgesehen. Vorteilhafterweise ist die Schneidplatte als Trigon-Platte mit drei eine Dachform mit einem Spitzenwinkel von 140 bis 170° aufweisenden Hauptschneiden ausgebildet, wobei die zu einer Hauptschneide gehörende Stützfase in den Eckbereich einer in einer definierten Umsetzrichtung benachbarten Hauptschneide eingeformt ist.

Die erfindungsgemäßen Maßnahmen eignen sich sowohl für die Verwendung in Vollbohrem als auch in Aufbohrem und Reibahlen, und dabei vorzugsweise in lang auskragenden und mehrschneidigen Werkzeugen. Durch die reibungsarme Abstützung und Führung in der Bohrung wird die Vibrationsneigung des Bohrwerkzeugs reduziert.

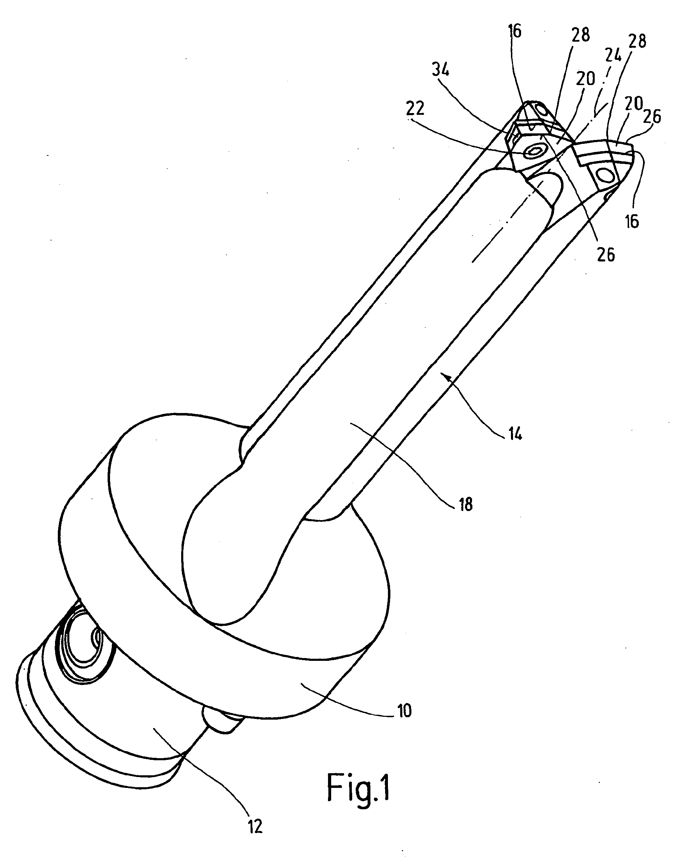

Im folgenden wird die Erfindung anhand der Zeichnung näher erläutert. Es zeigen
- Fig. 1: eine schaubildliche Darstellung eines doppelschneidigen Bohrwerkzeugs mit Trigon-Umsetzschneidplatten;
- Fig. 2: eine schaubildliche Darstellung einer Trigon-Umsetz-schneidplatte;
- Fig. 3a bis c: eine Draufsicht und zwei Seitenansichten der Trigon-Schneidplatte nach Fig. 2;
- Fig. 4: einen vergrößerten Ausschnitt einer Seitenansicht der Um-setzschneidplatte mit Stützfase in schematischer Darstellung innerhalb der Bohrergeometrie.

Das in der Zeichnung dargestellte Bohrwerkzeug ist als zweischneidiger Aufbohrer ausgebildet. Das Bohrwerkzeug ist für den Einsatz in Werkzeugmaschinen bestimmt und weist zu diesem Zweck einen von einem Kupplungsflansch 10 für eine Planflächenanlage begrenzten Kupplungsschaft 12 für den Anschluß an eine nicht dargestellte Maschinenspindel auf. Mit dem Kupplungsflansch 10 ist außerdem ein langgestreckter Grundkörper 14 verbunden, der im Bereich seines stirnseitigen Endes mit zwei Plattensitzen 16 versehen ist, von denen aus sich Spanfördemuten 18 über die Länge des Grundkörpers 14 erstrecken. In den Plattensitzen 16 sind zwei gleich ausgebildete Trigon-Umsetzschneidplatten 20 auswechselbar angeordnet und mit Befestigungsschrauben 22 am Grundkörper 14 befestigt. Die Befestigungsschrauben sind dabei von den Spanfördernuten aus im wesentlichen senkrecht zur Bohrerachse 24 in den Grundkörper 14 eingedreht.

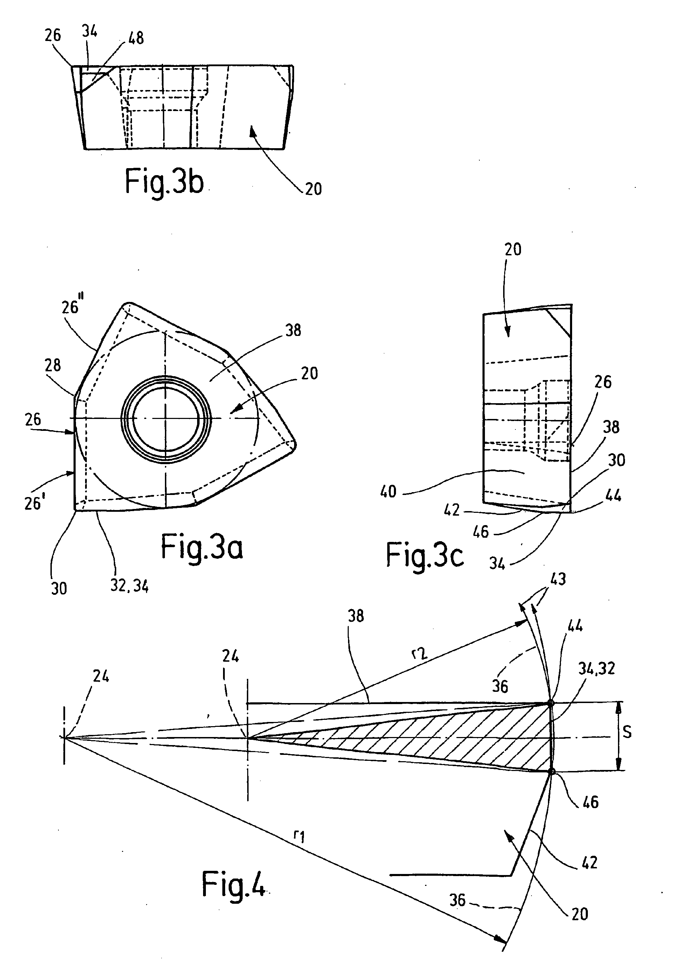

Jede der Schneidplatten weist drei Hauptschneiden 26 auf, von denen eine im Einbauzustand wirksam ist. Die Hauptschneiden 26 weisen eine dachförmige Spitze 28 auf, wobei der eine Schenkel 26' der Hauptschneide von der Spitze 28 aus zur Schneidenecke 30 hin geradlinig verläuft und der andere Schenkel 26" zur anderen Schneidenecke 30 hin eine weitere stumpfwinklige Abbiegung 32 aufweist. Der Winkel der dachförmigen Spitze 28 und der stumpfe Winkel im Bereich der Abbiegung 32 sind dabei so dimensioniert, daß zwischen dem Hauptschneidenschenkel 26' und der benachbarten Abbiegung 32 sich ein Winkel von 70° bis 110°, vorzugsweise von 90° ergibt. Die dem jeweiligen Hauptschneidenschenkel 26' über die Schneidenecke 30 benachbarte Abbiegung 32 bildet im Einbauzustand eine Nebenschneide, an die sich eine Führungs- und Stützfase 34 zur Abstützung des Werkzeugs an der Bohrungswand 36 (Fig. 4) anschließt.

Die Schneidplatte weist ferner eine in die Spanfördemut 18 mündende Spanfläche 38 sowie eine mit der Spanfläche einen Schneidkeil bildende Hauptfreifläche 40 auf. Die Nebenschneide 32 ist an ihrer einen Längsseite durch die gemeinsame Spanfläche 38 begrenzt, während auf der anderen Seite der Stützfase 34 eine Nebenfreifläche 42 anschließt.

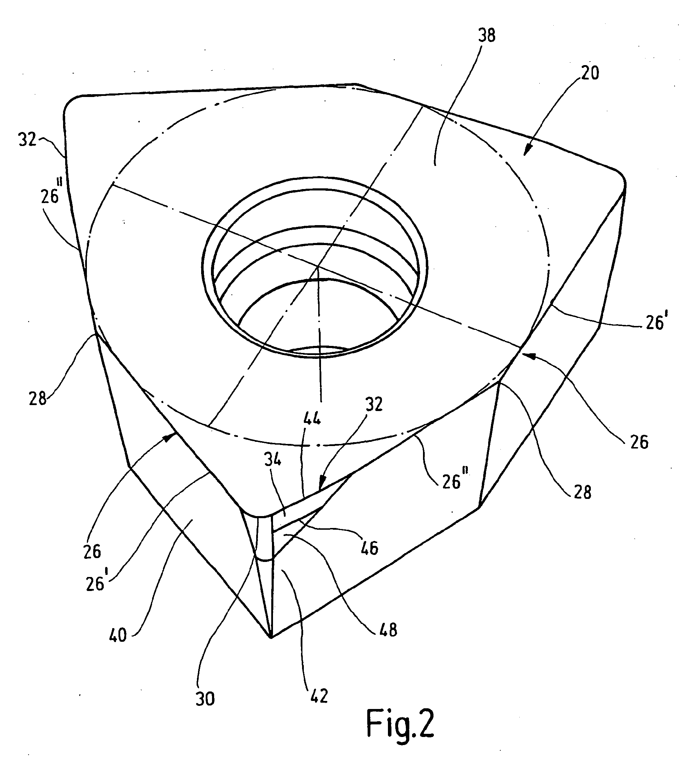

Die Stützfase 34 ist durch zwei in Drehrichtung 43 des Werkzeugs im Abstand s voneinander angeordnete Stützkanten 44, 46 begrenzt, die über ihre gesamte Länge den gleichen Radiusabstand r₁ bzw. r₂ von der Werkzeugachse 24 aufweisen, der dem Flugkreisradius des Werkzeugs entspricht. Wie aus Fig. 2 in Verbindung mit Fig. 4 zu ersehen ist, verlaufen die Stützkanten 44, 46 parallel zur Werkzeugachse 24, sind aber bei dem gezeigten Ausführungsbeispiel im Hinblick auf die zusätzliche Dreiecksfase 48 unterschiedlich lang. Die Stützfase 34 als solche ist hier als zur Werkzeugachse 24 parallele ebene Fläche ausgebildet (vgl. Fig. 3c und Fig. 4).

Mit den beschriebenen Maßnahmen wird erreicht, daß das Werkzeug beim Bohrvorgang über die Stützkanten 44, 46 der Stützfase 34 reibungsarm an der Bohrungswand 36 abstützbar ist, und daß ein und dieselbe Schneidplatte für unterschiedliche Bohrungsradien r₁, r₂ einsetzbar ist.

Zusammenfassend ist folgendes festzuhalten: Die Erfindung bezieht sich auf eine Schneidplatte für um eine Werkzeugachse drehende Werkzeuge, insbesondere für mehrschneidige Bohrwerkzeuge. Die Schneidplatte weist eine Hautpschneide 26 und eine in deren Verlängerung radial nach außen hin über eine Schneidenecke 30 unter einem Winkel an diese anschließende Nebenschneide 32 auf. An die eine Längsseite der Hauptschneide 26 und der Nebenschneide 32 schließt eine gemeinsame Spanfläche 38 an, während auf der anderen Längsseite der Hauptschneide 26 und der Nebenschneide 32 eine Hauptfreifläche 40 bzw. eine Nebenfreifläche 42 anschließt, die mit der Spanfläche einen Keilwinkel einschließt. Um das Werkzeug reibungsarm an der Bohrungswand 36 abstützen zu können und damit auch bei lang auskragenden Werkzeugen eine weitgehend vibrationsfreie Bearbeitung zu ermöglichen, wird gemäß der Erfindung vorgeschlagen, daß im Bereich der Nebenschneide 32 eine Stützfase 34 angeordnet ist, die durch zwei in Drehrichtung des Werkzeugs im Abstand voneinander angeordnete Stützkanten 44, 46 begrenzt ist, wobei die Stützkanten über ihre gesamte Länge den gleichen Radiusabstand r₁ bzw. r₂ von der Werkzeugachse 24 aufweisen. Die Stützkanten 44, 46 sind zweckmäßig parallel zur Werkzeugachse 24 ausgerichtet, während die Stützfase zweckmäßig als zur Werkzeugachse 24 parallele ebene Fläche ausgebildet ist.

## Patentansprüche

1. Werkzeug für den Einsatz in Werkzeugmaschinen mit einem um eine Werkzeugachse (24) drehbaren Grundkörper (14) und mit mindestens einer in einen Plattensitz (16) des Grundkörpers (14) auswechselbar eingesetzten Schneidplatte (20), wobei die Schneidplatte (20) eine Hauptschneide (26), eine in deren Verlängerung radial nach außen hin über eine Schneidenecke (30) unter einem Winkel anschließende Nebenschneide (32), eine auf einer Längsseite der Hauptschneide (26) und der Nebenschneide (32) anschließende gemeinsame Spanfläche (38) und je eine auf der anderen Längsseite an die Hauptschneide (26) bzw. die Nebenschneide (32) anschließende, mit der gemeinsamen Spanfläche je einen Keilwinkel einschließende Hauptfreifläche (40) bzw. Nebenfreifläche (42) aufweist, **dadurch gekennzeichnet, daß** im Bereich der Nebenschneide (32) eine Stützfase (34) angeordnet ist, die durch zwei in Drehrichtung des Werkzeugs im Abstand voneinander angeordnete, parallel zur Werkzeugachse (24) verlaufende Stützkanten (44, 46) begrenzt ist, wobei die Stützkanten (44, 46) über ihre gesamte Länge den gleichen Radiusabstand (r₁ bzw. r₂) von der Werkzeugachse (24) aufweisen.

2. Werkzeug nach Anspruch 1, **dadurch gekennzeichnet, daß** die Stützfase (34) als zur Werkzeugachse (24) parallele ebene Fläche ausgebildet ist.

3. Werkzeug nach einem der Ansprüche 1 bis 2, **dadurch gekennzeichnet, daß** die Stützfase (34) in ihrer parallel zur Werkzeugachse (24) ausgerichteten Längserstreckung eine Länge aufweist, die mindestens dem doppelten Abstand zwischen den Stützkanten (44, 46) entspricht.

4. Werkzeug nach einem der Ansprüche 1 bis 3, **dadurch gekennzeichnet, daß** die Stützkanten (44, 46) einen Abstand von 0,1 bis 1,5 mm voneinander aufweisen.

5. Werkzeug nach einem der Ansprüche 1 bis 4, **dadurch gekennzeichnet, daß** die Stützfase (34) zwischen den Stützkanten (44, 46) sich über einen Bruchteil der Schneidplattendicke erstreckt.

6. Werkzeug nach einem der Ansprüche 1 bis 5, **dadurch gekennzeichnet, daß** die Stützfase (34) in ihrer Längserstreckung bis zur vorzugsweise abgerundeten oder facettierten Schneidenecke (30) reicht.

7. Werkzeug nach einem der Ansprüche 1 bis 6, **dadurch gekennzeichnet, daß** die Hauptschneide (76) und die anschließende Nebenschneide (32) in ihrer Längserstreckung einen Winkel von 70° bis 110° einschließen.

8. Werkzeug nach einem der Ansprüche 1 bis 7, **dadurch gekennzeichnet, daß** die mindestens eine Schneidplatte (20) als Umsetzschneidplatte zwei in gleichen Winkelabständen voneinander angeordneten Hauptschneiden (26) und Stützfasen (34) ausgebildet ist.

9. Werkzeug nach Anspruch 8, **dadurch gekennzeichnet, daß** sie als Trigon-Platte mit drei eine Dachform mit einem Spitzenwinkel von 140 bis 170° aufweisenden Hauptschneiden (26) ausgebildet ist.

10. Werkzeug nach Anspruch 8 oder 9, **dadurch gekennzeichnet, daß** die zu einer Hauptschneide (26) gehörende Stützfase (34) in den Eckbereich einer in definierter Umsetzrichtung benachbarten Hauptschneide (26) eingeformt ist.

11. Werkzeug nach einem der Ansprüche 1 bis 10, **dadurch gekennzeichnet, daß** die Stützkanten (44, 46) abgerundet oder im wesentlichen tangential zum Werkzeugflugkreis facettiert sind.

## Claims

1. A tool for use in machine tools comprising a base body (14) rotatable about a tool axis (24), and comprising at least one cutting plate (20) exchangeably inserted into a plate seat (16) of the base body (14), whereby the cutting plate (20) has a major cutting edge (26), a minor cutting edge (32) connected, in the extension of said major cutting edge radially outwardly through a cutting-edge corner (30), to said major cutting edge at an angle, a common machining face (38) connected on one longitudinal side of the major cutting edge (26) and of the minor cutting edge (32), and a major flank (40) or a minor flank (42) connected on the other longitudinal side of the major cutting edge (26) or the minor cutting edge (32), and each defining a wedge angle with the common machining face, **characterized in that** in the area of the minor cutting edge (32) there is arranged a support land (34), which is defined by two support edges (44, 46) arranged at a distance from each other in a direction of rotation of the tool, and extending parallel to the tool axis (24), whereby the support edges (44, 46) have over their entire length the same radius distance (r₁ or r₂) from the tool axis (24).

2. The tool according to Claim 1, **characterized in that** the support land (34) is designed as a flat surface parallel to the tool axis (24).

3. The tool according to one of the Claims 1 to 2, **characterized in that** the support land (34) has a length in its longitudinal extent aligned parallel to the tool axis (24), which length corresponds at least to twice the distance between the support edges (44, 46).

4. The tool according to one of the Claims 1 to 3, **characterized in that** the support edges (44, 46) are spaced at a distance of 0.1 to 1.5 mm from each other.

5. The tool according to one of the Claims 1 to 4, **characterized in that** the support land (34) extends between the support edges (44, 46) over a fraction of the cutting-plate thickness.

6. The tool according to one of the Claims 1 to 5, **characterized in that** the support land (34) extends in its longitudinal extent to the preferably rounded or faceted cutting-edge corner (30).

7. The tool according to one of the Claims 1 to 6, **characterized in that** the major cutting edge (26) and the connected minor cutting edge (32) define an angle of 70° to 110° in their longitudinal extent.

8. The tool according to one of the Claims 1 to 7, **characterized in that** the at least one cutting plate (20) is designed as an indexable insert with two major cutting edges (26) and support lands (34) arranged at equal angular distances from each other.

9. The tool according to Claim 8, **characterized in that** it is designed as a trigon insert with three major cutting edges (26) having a roof shape with a point angle of 140° to 170°.

10. The tool according to Claim 8 or 9, **characterized in that** support land (34), which belongs to a major cutting edge (26), is formed into the corner area of a major cutting edge (26) adjacent in a defined index direction.

11. The tool according to one of the Claims 1 to 10, **characterized in that** the support edges (44, 46) are rounded or faceted essentially tangentially to the tool flight circle.

## Revendications

1. Outil conçu pour être utilisé dans des machines-outils, comportant un corps de base (14) pouvant tourner autour de l'axe (24) dudit outil, et au moins une platine de coupe (20) disposée dans un logement (16) dudit corps de base (14), avec faculté de remplacement, ladite platine de coupe (20) comprenant un tranchant principal (26) ; un tranchant auxiliaire (32) situé dans le prolongement de ce dernier, auquel il se rattache vers l'extérieur dans le sens radial, par l'intermédiaire d'un coin (30), en décrivant un angle ; une facette commune d'attaque (38), située dans la continuité directe sur un côté longitudinal du tranchant principal (26) et du tranchant auxiliaire (32) ; et une face principale de dépouille (40) ou une face auxiliaire de dépouille (42), respectivement située dans la continuité directe sur l'autre côté longitudinal dudit tranchant principal (26) ou dudit tranchant auxiliaire (32), et décrivant respectivement un angle de conicité avec ladite facette commune d'attaque, **caractérisé par le fait qu'**un biseau d'appui (34), façonné dans la région du tranchant auxiliaire (32), est délimité par deux arêtes d'appui (44, 46) s'étendant parallèlement à l'axe (24) de l'outil et agencées à distance l'une de l'autre dans le sens de rotation dudit outil, lesdites arêtes d'appui (44, 46) présentant, sur toute leur longueur, la même distance radiale (r₁, respectivement r₂) vis-à-vis de l'axe (24) dudit outil.

2. Outil selon la revendication 1, **caractérisé par le fait que** le biseau d'appui (34) est réalisé sous la forme d'une surface plane parallèle à l'axe (24) dudit outil.

3. Outil selon l'une des revendications 1 à 2, **caractérisé par le fait que** le biseau d'appui (34) possède, sur son étendue longitudinale orientée parallèlement à l'axe (24) dudit outil, une longueur correspondant au moins au double de la distance comprise entre les arêtes d'appui (44, 46).

4. Outil selon l'une des revendications 1 à 3, **caractérisé par le fait que** les arêtes d'appui (44, 46) sont mutuellement espacées d'une distance de 0,1 à 1,5 mm.

5. Outil selon l'une des revendications 1 à 4, **caractérisé par le fait que** le biseau d'appui (34) s'étend, entre les arêtes d'appui (44, 46), sur une fraction de l'épaisseur des platines de coupe.

6. Outil selon l'une des revendications 1 à 5, **caractérisé par le fait que** le biseau d'appui (34) se prolonge, sur son étendue longitudinale, jusqu'au coin (30) du tranchant offrant, de préférence, un arrondi ou une facette.

7. Outil selon l'une des revendications 1 à 6, **caractérisé par le fait que** le tranchant principal (26) et le tranchant auxiliaire attenant (32) décrivent un angle de 70° à 110° sur leur étendue longitudinale.

8. Outil selon l'une des revendications 1 à 7, **caractérisé par le fait que** la platine de coupe (20), prévue au minimum, est réalisée sous la forme d'une platine de coupe à permutation comprenant deux tranchants principaux (26) et deux biseaux d'appui (34) disposés selon des espacements angulaires mutuellement égaux.

9. Outil selon la revendication 8, **caractérisé par le fait qu'**il est réalisé sous la forme d'une platine trigonométrique comprenant trois tranchants principaux (26) décrivant la forme d'une toiture dont la pointe présente un angle de 140 à 170°.

10. Outil selon la revendication 8 ou 9, **caractérisé par le fait que** le biseau d'appui (34), faisant partie d'un tranchant principal (26), est façonné dans la zone d'angle d'un tranchant principal (26) occupant une position voisine dans une direction de permutation bien définie.

11. Outil selon l'une des revendications 1 à 10, **caractérisé par le fait que** les arêtes d'appui (44, 46) offrent un arrondi ou une facette ménagée, pour l'essentiel, tangentiellement vis-à-vis de la circonférence de révolution dudit outil.
